# EUROPEAN PATENT SPECIFICATION

(11) **EP 1 116 984 B1**
(45) Date of publication and mention of the grant of the patent: **26.03.2003**
(21) Application number: 01300003.9
(22) Date of filing: 02.01.2001
(51) Int. Cl.: G02C 9/04

(54) **Enclosed spring bridge mechanism for clip-on sunglasses**
Umschlossener Brückenfedermechanismus für Sonnenbrillen mit Klemmbefestigung
Méchanisme avec pont à ressort enfermé pour lunettes de soleil du type à pincement

(30) Priority: 10.01.2000 US 480564; 31.10.2000 US 702122
(43) Date of publication of application: 18.07.2001
(73) Proprietor: Friedman, Dean M., Atlantic Beach, New York 11509 (US)
(72) Inventor: Friedman, Dean M., Atlantic Beach, New York 11509 (US)
(74) Representative: Bluff, John William

(56) References cited:
- GB-A- 368 585
- US-A- 1 679 233
- US-A- 5 477 281
- US-A- 5 506 637
- US-A- 5 710 614
- US-A- 5 801 804

## Description

The present invention relates to a clip-on sunglass assembly and more particularly to a spring bridge mechanism for a clip-on sunglass assembly which permits the assembly to be easily and securely mounted on eyeglasses.

A clip-on sunglass assembly consists of a metal or plastic frame which carries a pair of light attenuating plastic or glass lenses. A mechanism is provided to permit the assembly to be removably mounted on eyeglasses.

In order to be commercially acceptable, the clip-on sunglass assembly must be light in weight, reasonably rugged and relatively inexpensive. It must also be easy to mount on and remove from the eyeglasses. Further, it must mount without damaging the eyeglasses, particularly the lenses.

one common type of mounting mechanism is a clamp which is attached to the bridge of the sunglass assembly. It includes pairs of opposing prongs which are spring loaded toward each other so as to retain the lenses of the eyeglasses between the prongs. Examples of this clamp-type mechanism are disclosed in U.S. Patent No. 3,575,497 issued April 20, 1971 to Leblanc, U.S. Patent No. 5,164,749 issued November 17, 1992 to Shelton and U.S. Design Patent No. Des 350,359 issued September 6, 1994 to Friedman.

However, clamp-type mechanisms have their disadvantages. The prongs must clamp tightly to the lenses, potentially scratching the lenses. The mechanism may obstruct the view partially. Moreover, this type of mechanism has several inter-engaging parts which must be fabricated precisely and assembled, making it relatively expensive and not always unreliable.

In order to overcome these drawbacks, a spring bridge mechanism was developed for mounting a clip-on sunglasses assembly which does not contact or clamp the lenses of the eyeglasses and therefore cannot scratch them. The-mechanism utilizes one or more sets of exposed spring loaded prongs. The prongs are movably or flexibly mounted on the sunglass frame assembly such that they can be moved against a spring force, for insertion between spaced portions of the eyeglasses frame.: The spring force causes the prongs to frictionally engage the eyeglass frame. Because the prongs only touch the frame, the lenses of the eyeglasses are not clamped or otherwise engaged. U.S. Patent No. 5,953,096 entitled "Universal Center Bridge Mounting Mechanism for Clip-On Sunglasses" was issued to Dean M. Friedman for that mechanism.

Another type of clip-on sunglass frame assembly, such as is described in Lockwood U.S. Patent No. 2,926,563, consists of mirror image frame parts, each of which carries a lens. The frame parts are connected together by a bridge mechanism which includes a metal coil spring. The mechanism permits the frame parts to move away from each other as the spring is compressed. Each frame part, at its outer extremity, is provided with a set (typically two or three) eyeglass frame engaging prongs. When the frame parts are moved away from each other, against the force of the spring, the eyeglass frame can be inserted between the prong sets. Releasing the frame parts permits the spring to move frame parts toward each other, such that the eyeglass frame is securely retained between the prong sets.

One problem inherent in this type of spring bridge mechanism is that. the coil spring is exposed. Aside from being unsightly, this is undesirable because bits of solid debris and other particulate foreign matter can enter between the coils to jam the mechanism or distort the spring. Liquid, such as rain or sweat, can enter the mechanism resulting in rusting or deterioration of the parts. Further, the skin, hair and eyebrows of the user are not protected from the exposed spring and can be pinched by the spring.

Another problem involved with having lens carrying frame parts which are moveable relative to each other relates to the linear alignment of the lenses. Since the lenses are polarized, it is important that proper linear alignment of the lenses be maintained. This requires the bridge mechanism to include a means for maintaining proper linear alignment between the lenses. Embodiments of this invention which overcome these problems are disclosed. In these embodiments the coil spring of the bridge mechanism is enclosed within a slender cylindrical enclosure. The enclosure isolates the spring from the skin and air of the wearer and prevents debris and liquids from reaching the spring.

U.S. patent 5,801,804 discloses a clip-on sunglass assembly for mounting on eyeglasses. The assembly is of the kind comprising:
first and second frame parts each comprising a lens retaining portion;
a bridge structure extending between the frame parts and including first and second bridging elements extending from the first and second frame parts respectively,
a connector portion acting between said first and second bridging elements and having a cylindrical enclosure in which a part is slidably received to allow movement of the frame parts between a proximate position and a remote position, and a spring in the enclosure acting to bias the first and second frame parts to one of the positions.

In patent 5,801,804 the spring acts to bias the frame parts toward the remote position. Each lens carries a notch 33, 38 at its outer edge which engages a respective temple piece of the eyeglasses. The sunglass assembly is mounted inwardly of the temple pieces and rearwardly of. the frame of the eyeglasses in order to be disposed between the temple pieces and to engage them by being biased to the remote or expanded position.

U.S. patent 5,477,281 discloses a clip-on sunglass assembly that is mountable forwardly of the eyeglasses. It is provided with adjustable means carried by the frame parts for mounting the sunglass assembly to the eyeglasses. The assembly is of the kind set forth above but lacks the spring for biasing the frame parts to one of the positions. There is no bias in the bridge mechanism. The lenses of the sunglass assembly are biased to a proximate position by a separate mechanism in which a tension spring is directly secured to and between the sunglass lenses. The spring is located within a telescopic tube.

According to one aspect of the present invention a sunglass assembly of the kind set forth above is characterised in that:
each frame part has at least one prong for engaging an eyeglass to mount the sunglass assembly forward of the eyeglasses, and
the spring of the bridge structure acts between the bridging elements to bias the frame parts toward the proximate position for engaging the prongs with the eyeglasses.

Preferably each frame part has two spaced prongs, i.e. a set of prongs, whereby the eyeglasses frame can be inserted between the sets of prongs and the spring force acts to move the frame parts together to engage the eyeglasses between the prongs.

In one embodiment of the invention the enclosure of the connector portion is carried by one bridging element and the part slidably received in it is an end portion of the other bridging element.

In another embodiment the bridge structure comprises a further connective portion comprising a further cylindrical enclosure in which a further part is slidably received and a further spring in the further enclosure acting to bias the frame parts to the proximate position. The two connector portions are connected to the first and second bridging elements respectively. A further bridging element connects between the connector portions. In the embodiment to be described the enclosures are carried by the first and second bridging elements respectively and the respective parts slidably received therein are respective end portions of the further bridging element.

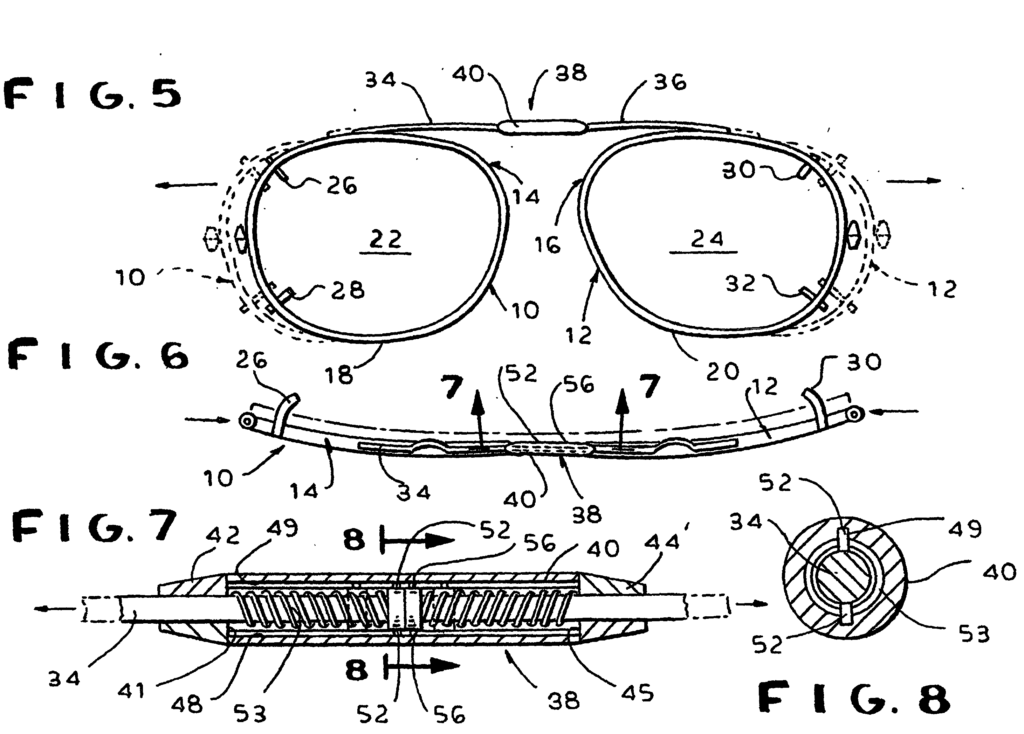

According to another aspect of the invention there is provided a clip-on sunglass assembly which is as set out in Claim 12. An embodiment in accordance with this aspect of the invention is describe below with reference to Fig. 5 to 8.

There are preferred features of the connector portion(s) which are generally applicable in the embodiments to be described and which are generally applicable to the aspects of the invention set forth above as set forth in dependent claims. Such features will now be outlined in general terms referring to a connector portion connected to and between bridge elements extending from respective frame parts.

The enclosure of the connector portion serves the additional purpose of co-operating with the bridge elements of the frame parts to keep the frame parts in proper alignment. This is achieved by one or more slots in the enclosure which cooperate with protrusions on the bridge elements to maintain the frame parts in alignment. The enclosure interior wall also provides an end surface for the spring to abut.

The enclosure enhances the appearance of the assembly by hiding the unsightly spring and the bridge element ends. Preferably, the enclosure is made of the same material and finish as the bridge elements and frame, resulting in a mechanism which is much less conspicuous than an exposed spring, and in which the spring is fully enclosed. The clip-on sunglass assembly has an attractive appearance.

An open end of the enclosure or each enclosure section through the slidable part is received may be tapered. The spring abuts the tapered end.

The invention and its practice will now be described with reference to embodiments thereof illustrated in the accompanying drawings, in which:
Figure 1 is a front plan view of a first preferred embodiment of the assembly of the present invention showing the frame parts in the proximate position in solid and in the remote position in phantom;
Figure 2 is a top plan view of the embodiment of the invention shown in Figure 1 mounted on eyeglasses;
Figure 3 is an enlarged cross-sectional view taken along line 3-3 of Figure 2;
Figure 4 is an enlarged cross-sectional view taken long line 4-4 of Figure 3;
Figure 5 is a front plan view of a second preferred embodiment of the assembly of the present invention showing the frame parts in the proximate position in solid and in the remote position in phantom;
Figure 6 is a top plan view of the embodiment of the invention shown in Figure 5;
Figure 7 is an enlarged cross-sectional view taken along line 7-7 of Figure 6;
Figure 8 is an enlarged cross-sectional view taken along line 8-8 of Figure 7;
Figure 9 is a front plan view of a third preferred embodiment of the present invention showing the frame parts in the proximate position in solid and in the remote position in phantom;
Figure 10 is a top plan view of the embodiment of Figure 9; and
Figure 11 is an enlarged cross-sectional view taken along line 11-11 of Figure 10.

As seen in the drawings, theclip-on assembly includes first and second frame parts, 10 and 12, which are substantially mirror images of each other. Each frame part 10, 12 includes a lens retaining portion 14, 16 respectively formed of a metal or plastic frame 18, 20 respectively at least partially surrounding a light attenuating lens 22, 24 respectively. Each frame 18, 20 carries a set (two or more) spaced, eyeglass engaging "L" shaped prongs 26, 28 and 30, 32, respectively, adapted to secure the assembly to eyeglasses 33. The prongs are preferably plastic or rubber coated.

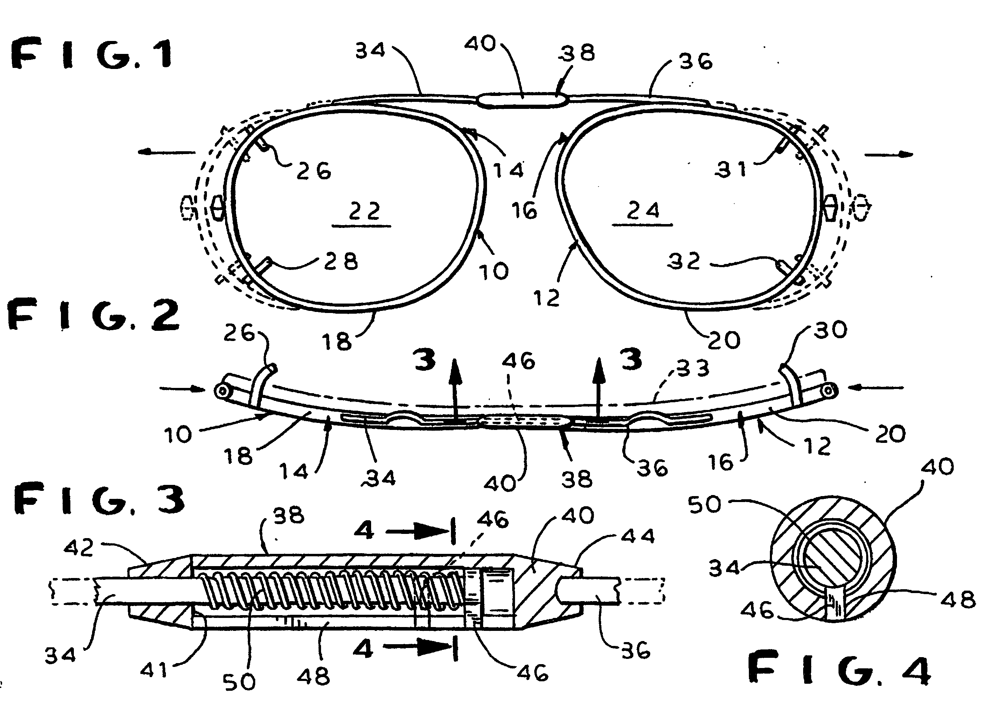

Each frame part 18, 20 has a bridge element 34, 36, respectively, which is joined to and extends from the top of the frame part. Bridge elements 34, 36 are connected by a spring mechanism, generally designated 38. Mechanism 38 includes a cylindrical enclosure 40 a tapered end parts 42, 44, respectively. As best seen in Figure 3, bridge element 34 extends through an opening in end part 42 and into the interior of enclosure 40. The end of bridge element 34 carries a protrusion 46. Protrusion 46 extends in a direction generally perpendicular to the axis of the bridge element and is slidably received within a slot 48 along the bottom of enclosure 40, as seen in Figure 4. Protrusion 46 and slot 48 cooperate to maintain proper alignment between the frame parts. A coil spring 50 is situated around. bridge element 34, operably interposed between protrusion 46 and the interior surface wall 41 of tapered end part 42. In this embodiment, bridge element 36 is fixed to tapered end piece 44 of enclosure 40.

The second preferred embodiment of the invention is illustrated in Figures 4 through 8. The major difference between the first preferred embodiment and the second preferred embodiment is that the second embodiment employs two smaller coil springs 53 and 54 instead of one large spring. Here, the portion of bridge element 34 received within enclosure 40 is smaller and the end part 44 of the enclosure is open such that a portion of bridge element 36 may be received within the interior of enclosure 40. See Figure 7.

The end of bridge element 36 carries oppositely extending protrusions 52 which extend in a direction generally perpendicular to the axis of the bridge element. Protrusions 52 are received within slots 48 and 49 in enclosure 40. See Figure 8.

Second coil spring 54 is situated around bridge element 36 and operably interposed between oppositely extending protrusions 56 on the end of element 36 and the interior surface wall 45 of enclosure end part 44'. Protrusions 56 cooperate with and are slideably received within slots 48 and 49, respectively, in the same manner as protrusions 52. The protrusions and slots cooperate to maintain proper alignment between the frame parts.

Both of these embodiments function in the-same manner. The spring mechanism 38 permits the user to grasp frame parts 10, 12 and to move them to a remote position, phantom in Figures 1 and 5, against the action of the springs, such that prongs 26, 28 and 30, 32 fit around the eyeglass frame. When released, the spring action of mechanism 38 causes the frame parts to move toward each other, so as to retain the eyeglass frame between the prongs, as seen in Figures 2 and 6. The prongs may be plastic or rubber coated so as not to scratch the eyeglass frames.

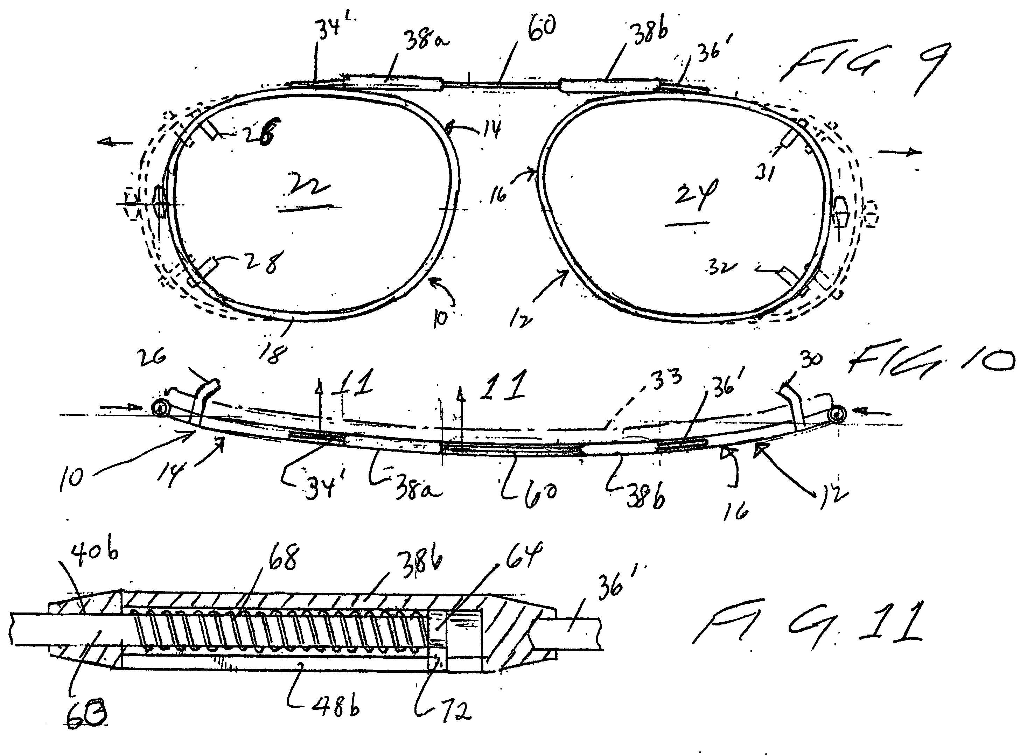

The third preferred embodiment, illustrated in Figures 9, 10 and 11, utilizes two separate cylindrical enclosures 38a and 38b, the end walls 40a and 40b of which are fixed respectively to shortened bridge elements 34' and 36'. Enclosures 38a and 38b are connected by a connecting element 60 having ends 62, 64 with protrusions 70, 72, respectively.

Two springs, 66, 68 are provided. Spring 66 is situated within enclosure 38a, operatively interposed between the open end 40a and protrusion 70 on end 62 of connecting element 60. Similarly, spring 68 is situated within enclosure 38b, operatively interposed between the open end 40b and the protrusion 72 on end 64 of connecting element 60.

This embodiment operates essentially the same way as the previous embodiment. Each enclosure has an elongated slot axial 48a, 48b, along which the protrusion 70, 72 on the end of connecting element 60 move so as to maintain proper alignment of the parts. As the frame parts are moved to the remote position, springs 66, 68 are compressed. The springs thus urge the frame parts toward the proximate position, so as to engage the eyeglasses between prongs 26, 28, 31 and 32.

It will now be appreciated that there has been described an enclosed spring bridge mechanism for mounting a sunglass assembly on eyeglasses without contacting or damaging the eyeglass lenses. Opposing frame parts with sets of prongs are moved apart to permit insertion of the eyeglass frame therebetween and then released to permit the spring force to move the parts together to retain the frame. The bridge mechanism includes one or more cylindrical enclosures within which the springs are situated.

## Claims

1. A clip-on sunglass assembly for mounting on eyeglasses comprising:
first (10) and second (12) frame parts each comprising a lens retaining portion (14: 16);
a bridge structure (34: 36: 38, 34': 38a, 60, 38b, 36') extending between the frame parts (10: 12) and including first (34, 34') and second (36, 36') bridging elements extending from the first (10) and second (12) frame parts respectively,
a connector portion (38, 38a) acting between said first (34, 34') and second (36, 36') bridging elements and having a cylindrical enclosure (40, 38b) in which a part (34, 34') is slidably received to allow movement of the frame parts (10: 12) between a proximate position and a remote position, and a spring (50) in the enclosure acting to bias the first (10) and second (12) frame parts to one of the positions,
**characterised in that**
each frame part (10: 12) has at least one prong (26: 31) for engaging an eyeglass to mount the sunglass assembly forward of the eyeglasses, and
the spring (50) acts between the first and second bridging elements to bias the frame parts toward the proximate position for engaging the prongs with the eyeglasses.

2. A clip-on sunglass assembly as claimed in Claim 1 in which the enclosure (38, 40) is carried by one bridging element (36) and said part slidably received in it is an end portion of the other bridging element (34).

3. A clip on sunglass assembly as claimed in Claim 1 in which said bridge structure (34': 38a: 60: 38b: 36') comprises a further connector portion (38b) comprising a further cylindrical enclosure (38b) in which a further part is slidably received and a further spring in the further enclosure acting to bias the frame parts to the proximate position, the connector portions (38a, 38b) being connected to said first (34'a) and second (36') bridging elements respectively and a further bridging element (60) which connects between the connector portions (38a, 38b).

4. A clip-on sunglass assembly as claimed in Claim 3 in which the enclosures (38a, 38b) are carried by the first (34') and second (36') bridging elements respectively and the respective parts slidably received therein are respective end portions of the further bridging element (60).

5. A clip-on sunglass assembly as claimed in Claim 2 in which the spring (50) acts between first and second end parts carried by the enclosure (40) and the other bridging element (34) respectively.

6. A clip-on sunglass assembly as claimed in Claim 5 in which the other bridging element (34) passes through the first end part (42) and said spring (50) and terminates in the second end part.

7. A clip-on sunglass assembly as claimed in Claim 5 or 6 in which the enclosure (40) has a slot (48) and the second end part has a protrusion (46) slidably received in the slot (48) to allow movement of the frame parts (10: 12) between the proximate and remote positions.

8. A clip-on sunglass assembly as claimed in Claim 3 or 4 in which each spring (50) acts between respective first (42) and second (64) end parts carried by the respective enclosure (38a: 38b) and the part slidably received therein.

9. A clip-on sunglass assembly as claimed in Claim 8 in which the respective part slidably received in each enclosure (38a, 38b) passes through the respective first end part (42) carried by the enclosure and the spring (50) therein and terminates in the second end part (64).

10. A clip-on sunglass assembly as claimed in Claim 8 or 9 in which each enclosure (38a: 38b) has a slot (48b) and the second end part (64) of the part slidably received in the enclosure has a protrusion (72) slidably received in the slot to allow movement of the frame parts (10,: 12) between the proximate and remote positions.

11. A clip-on sunglass assembly as claimed in Claim 1, 2 or 3 in which the or each enclosure, as the case may be, has a slot (48, 48') and the or each part slidably received therein has a protrusion (46, 72) slidably received in the slot (48, 48').

12. A clip-on sunglass assembly as claimed in any preceding claim in which each frame part (10: 12) has two spaced prongs (26, 28: 31, 32) for engaging an edge of an eyeglass.

13. A clip-on sunglass assembly for mounting on eyeglasses, comprising:
first (10) and second (12) frame parts each comprising a lens retaining portion (14: 16);
first (34) and second (36) bridging elements extending from said first (10) and second (12) frame parts; and
a connector portion (38) acting between the bridging elements (34: 36) and comprising a cylindrical enclosure (40) and a part slidably received therein to allow movement of the frame parts (10: 12) between a proximate position and a remote position, and a spring (53) in the cylindrical enclosure acting between the enclosure (40) and said part slidably received therein to bias the first (10) and second (12) frame parts to one of the positions, **characterised in that**:
the cylindrical enclosure (40) comprises first and second sections in which a first and second part respectively is slidably received, said first and second parts being carried by said first (34) and second (36) bridging elements respectively, and a first (53) and a second (54) spring is received within said first and second enclosure sections respectively to act between the respective enclosure section and the respective part slidably received therein to bias the first (10) and second (12) frame parts to the proximate position; and
each frame part (10: 12) has at least one prong (26: 31) for engaging an eyeglass to mount the sunglass assembly forward of the eyeglasses.

14. A clip-on sunglass assembly as claimed in Claim 13 in which each frame part (10: 12) has two spaced prongs (26, 28: 31, 32) for engaging an edge of an eyeglass.

15. A clip-on sunglass assembly as claimed in Claim 13 or 14 in which the first spring (53) acts between first (42) and second end parts carried by the first enclosure section and the first part slidably received therein respectively and the second spring (54) acts between the third (44') and fourth end parts carried by the second enclosure section and the second part slidably received therein respectively.

16. A clip-on sunglass assembly as claimed in Claim 15 in which the first part slidably received in the first enclosure section passes through the first end part (42) and the first spring (53) and terminates in the second end part, and the second part slidably received in the second enclosure section passes through the third end part (44') and the second spring (54) and terminates in the fourth end part.

17. A clip-on sunglass assembly as claimed in Claim 15 or 16 in which each of the first and second enclosure sections has a slot (48: 49) and each of the second and fourth end parts has a respective protrusion (52: 56) slidably received in the respective slot (48: 49) of the first and second enclosure sections to allow movement of the first and second frame parts (10: 12) between the proximate and remote positions.

18. A clip-on sunglass assembly as claimed in Claim 13 or 14 in which each enclosure section has a slot (48: 49) and the respective part slidably received therein has a respective protrusion (52: 56) slidably received in the slot (48: 49).

19. A clip-on sunglass assembly as claimed in any one of Claims 12 to 16 in which said first and second slidably received parts are end portions of said first (34) and second (36) bridging elements respectively.

## Patentansprüche

1. Klemm-Mechanismus für Sonnenbrillen zum Befestigen auf Augengläsern, umfassend:
erste (10) und zweite (12) Rahmenteile, die jeweils ein Linsenhalteteil (14, 16) aufweisen;
eine Brückenstruktur (34, 36, 38, 34', 38a, 60, 38b, 36'), die sich zwischen den Rahmenteilen (10, 12) erstrecken und erste (34, 34') und zweite (36, 36') Brückenelemente haben, die sich von ersten (10) bzw. zweiten Rahmenteilen (12) erstrecken;
ein Verbindungsteil (38. 38a), das zwischen dem ersten (34, 34') und zweiten (36, 36') Brückenelementen tätig ist und eine zylindrische Kapsel (40, 38b) hat, in welcher ein Teil (34, 34') gleitend aufgenommen wird, um Bewegung der Rahmenteile (10, 12) zwischen einer nächsten Position und einer entfernten Position zu ermöglichen, und eine Feder (50) in der Kapsel vorgesehen ist, um die ersten (10) und zweiten Rahmenteile (12) für eine der Positionen zu beaufschlagen, **dadurch gekennzeichnet, daß**
jedes Rahmenteil (10, 12) mindestens einen Zinken (26, 31) zum Erfassen eines Augenglases hat, um den Mechanismus für die Sonnenbrille vor den Augengläsern zu befestigen und
die Feder (50) zwischen den ersten und zweiten Brückenelementen tätig ist, um die Rahmenteile in Richtung auf die nächste Position zum Erfassen der Zinken mit den Augengläsern zu beaufschlagen.

2. Klemm-Mechanismus zum Befestigen auf Augengläsern nach Anspruch 1, in welchem die Kapsel (38, 40) von einem Brückenelement (36) getragen und das Teil gleitend darin aufgenommen wird, ist ein Stirnteil des anderen Brückeneiementes (34).

3. Klemm-Mechanismus für Sonnenbrillen zum Befestigen auf Augengläsern nach Anspruch 1, in welchem die Brückenstruktur (34', 38a, 60, 38b, 36') ein weiteres Verbindungsteil (38b) mit einer weiteren zylindrischen Kapsel (38b) aufweist, in welcher ein weiteres Teil gleitend aufgenommen wird, und eine weitere Feder in einer weiteren Kapsel tätig ist, um die Rahmenteile für die nächste Position zu beaufschlagen, wobei die Verbindungsteile (38a, 38b) mit den ersten (34'a) bzw. zweiten (36') Brückenelementen verbunden sind und ein weiteres Brückenelement (60)vorgesehen ist, das zwischen den Verbindungsteilen (38a, 38b) verbindet.

4. Klemm-Mechanismus für Sonnenbrillen nach Anspruch 3, in welchem die Kapseln (38a, 38b) von den ersten (34) bzw. zweiten (36') Brückenelementen getragen und die betreffenden Teile gleitend darin aufgenommen werden, sind die jeweiligen Stirnteile des weiteren Brückenelementes (60).

5. Klemm-Mechanismus für Sonnenbrillen nach Anspruch 2, in welchem die Feder (50 zwischen ersten und zweiten Stirnteilen tätig ist, die an der Kapsel (40) bzw. dem anderen Brückenelement (34) getragen werden.

6. Klemm-Mechanismus für Sonnenbrillen nach Anspruch 5, in welchem das andere Brückenelement (34) durch das erste Stirnteil (42) und die Feder (50) geht und im zweiten Stirnteil endet.

7. Klemm-Mechanismus für Sonnenbrillen nach Anspruch 5 oder 6, in welchem die Kapsel (40) einen Schlitz (48) und das zweite Stirnteil einen Vorsprung (46) hat, der gleitend im Schlitz (48) aufgenommen wird, um Bewegung der Rahmenteile (10, 12) zwiscnen den nächsten und entfernten Positionen zu ermöglichen.

8. Klemm-Mechanismus für Sonnenbrillen nach Anspruch 3 oder 4, in welchem jede Feder (50) zwischen dem betreffenden ersten Stirnteil (42) und zweiten Stirnteilen (64) tätig ist und von der betreffenden Kapsel (38a, 38b) getragen wird und das Teil gleitend darin aufgenommen wird.

9. Klemm-Mechanismus für Sonnenbrillen nach Anspruch 8, in welchem das betreffende Teil gleitend in jede Kapsel (38a, 38b) aufgenommen wird, die durch das betreffende erste Stirnteil (42) hindurchgeht, das von der Kapsel (38a, 38b) und der Feder (50) darin getragen wird und im zweiten Stirnteil (64) endet.

10. Klemm-Mechanismus für Sonnenbrillen nach Anspruch 8 oder 9, in welchem jede Kapsel (38a 38b) einen Schlitz (48b) hat und das zweite Stirnteil (64) von dem Teil gleitend in der Kapsel aufgenommen wird und die Kapsel (38a, 38b) einen Vorsprung (72) hat, der gleitend zwischen den nächsten und entfernten Positionen aufgenommen wird.

11. Klemm-Mechanismus für Sonnenbrillen nach den Ansprüchen 1, 2 oder 3, in welchem die Kapsel oder jede Kapsel, je nach Fall, einen Schlitz (48, 48') hat und das oder jedes Teil gleitend darin aufgenommen wird, hat einen Vorsprung (46, 72), der gleitend in den Schlitz (48, 48') aufgenommen wird.

12. Klemm-Mechanismus für Sonnenbrillen nach einem der vorhergehenden Ansprüche, in welchem jedes Rahmenteil (10, 12) zwei beabstandete Zinken (26, 28; 31, 32) zum Erfassen einer Kante eines Augenglases hat.

13. Klemm-Mechanismus für Sonnenbrillen zum Befestigen auf Augengläsern, umfassend:
erste (10) und zweite (12) Rahmenteile, von denen jedes Teil ein Linsenhalteteil (14, 16) aufweist;
erste (34) und zweite (36) Brückenelemente, die sich von ersten (10) und zweiten (12) Rahmenteilen erstrecken und
ein Verbindungsteil (38) hat, das zwischen den Brückenelementen (34, 36) tätig ist und eine zylindrische Kapsel (40) und ein Teil aufweist, das darin gleitend aufgenommen wird, um Bewegung der Rahmenteile (10, 12) zwischen einer nächsten Position und einer entfernten Position zu ermöglichen sowie eine Feder (53) in der zylindrischen Kapsel aufweist, die zwischen der Kapsel (40) und dem Teil tätig ist, das darin gleitend aufgenommen wird, um die ersten (10) und zweiten (12) Rahmenteile für eine der Positionen zu beaufschlagen, **dadurch gekennzeichnet, daß**
die zylindrische Kapsel (40) erste und zweite Abschnitte aufweist, in welchem ein erstes bzw. zweites Teil gleitend aufgenommen wird, wobei erste und zweite Teile von den ersten (34) bzw. zweiten (36) Brückenteilen getragen werden, und eine erste (53) und eine zweite Feder (54) innerhalb der ersten bzw. zweiten Kapselabschnitten aufgenommen wird, um zwischen dem betreffenden Kapselabschnitt tätig zu sein und
das betreffende Teil gleitend darin aufgenommen wird, um die ersten (10) und zweiten (12) Rahmenteile für die nächste Position zu beaufschlagen und jedes Rahmenteil (10, 12) mindestens einen Zinken (26, 31) zum Erfassen eines Augenglases hat, um den Mechanismus für die Sonnenbrillen vor den Augengläsern zu befestigen.

14. Klemm-Mechanismus für Sonnenbrillen nach Anspruch 13, in welchem jedes Rahmenteil (10, 12) zwei beabstandete Zinken (26, 28, 32, 32) zum Erfassen einer Kante eines Augenglases hat.

15. Klemm-Mechanismus für Sonnenbrillen nach Anspruch 13 oder 14, in welchem die erste Feder (53) zwischen ersten (42) und zweiten Stirnteilen vom ersten Kapselabschnitt getragen bzw. das erste Teil gleitend darin aufgenommen wird und die zweite Feder (54) zwischen den dritten (44') und vierten:
Stirnteilen tätig ist, die von dem zweiten Kegelabschnitt getragen bzw. das zweite Teil gleitend darin aufgenommen wird.

16. Klemm-Mechanismus für Sonnenbrillen nach Anspruch 15, in welchem das erste Teil gleitend in den ersten Kapselabschnitt aufgenommen wird, der durch das erste Stirnteil (42) und die erste Feder (53) hindurchgeht und im zweiten Stirnteil endet und der zweite Teil gleitend im zweiten Kapselabschnitt aufgenommen wird, der durch das dritte Stirnteil (44') und die, zweite Feder (54) hindurchgeht und im vierten Stirnteil endet.

17. Klemm-Mechanismus für Sonnenbrillen nach Anspruch 15 oder 16, in welchem jeder der ersten und zweiten Kapselabschnitte einen Schlitz (48, 49) hat und jeder der zweiten und vierten Stirnabschnitte einen jeweiligen Vorsprung (52, 56) hat, der in den betreffenden Schlitz (48, 49) der ersten und zweiten Kapselabschnitte gleitend aufgenommen wird, um Bewegung der ersten und zweiten Rahmenteile (10, 12), zwischen den nächsten und entfernten Positionen zu ermöglichen.

18. Klemm-Mechanismus für Sonnenbrillen nach Anspruch 13 oder 14, in welchem jeder Kegelabschnitt einen Schlitz (48, 49) hat und das betreffende Teil gleitend darin aufgenommen wird, hat einen jeweiligen Vorsprung (52, 56), der gleitend in den Schlitz (48, 49) aufgenommen wird.

19. Klemm-Mechanismus für Sonnenbrillen nach einem der Ansprüche 12 bis 16, in welchem die ersten und zweiten gleitend aufgenommenen Teile Stirnabschnitte der ersten (34) bzw. zweiten (36) Brückenelemente sind.

## Revendications

1. Ensemble de verres solaires à griffes destinés à être montés sur des lunettes, comportant :
une première (10) et une seconde (12) parties formant cadre comportant chacune une partie de maintien de verre (14 : 16),
une structure formant arcade (34 : 36 : 38, 34' : 38a, 60, 38b, 36') s'étendant entre les parties formant cadre (10, 12) et comportant un premier (34, 34') et un second (36, 36') éléments d'arcade s'étendant à partir des première (10) et seconde (12) parties formant cadre respectivement,
une partie formant connecteur (38, 38a) agissant entre lesdits premier (34, 34') et second (36, 36') éléments d'arcade et ayant une gaine cylindrique (40, 38b) dans laquelle une partie (34, 34') est reçue de manière coulissante pour permettre un déplacement des parties formant cadre (10 : 12) entre une position proximale et une position éloignée, et un ressort (50) situé dans la gaine agissant pour rappeler les première (10) et seconde (12) parties formant cadre vers l'une des positions,
**caractérisé en ce que**
chaque partie formant cadre (10, 12) a au moins une griffe (26, 31) destinée à venir en prise avec une paire de lunettes pour monter l'ensemble de verre solaire à l'avant des lunettes, et
le ressort (50) agit entre les premier et second éléments d'arcade pour rappeler les parties formant cadre en direction de la position proximale pour mettre en prise les griffes avec les lunettes.

2. Ensemble de verres solaires à griffes selon la revendication 1, dans lequel la gaine (38, 40) est supportée par un premier élément d'arcade (36) et ladite partie reçue de manière coulissante dans celle-ci est une partie d'extrémité de l'autre élément d'arcade (34).

3. Ensemble de verres solaires à griffes selon la revendication 1, dans lequel ladite structure d'arcade (34' : 38a : 60 : 38b : 36') comporte une autre partie formant connecteur (38b) comportant une autre gaine cylindrique (38b) dans laquelle une autre partie est reçue de manière coulissante et un autre ressort situé dans l'autre gaine agit pour rappeler les parties formant cadre vers la position proximale, les parties formant connecteur (38a, 38b) étant reliées auxdits premier (34'a) et second (36') éléments d'arcade respectivement et un élément d'arcade supplémentaire (60) qui est relié entre les parties formant connecteur (38a, 38b).

4. Ensemble de verres solaires à griffes selon la revendication 3, dans lequel les gaines (38a, 38b) sont supportées par le premier (34') et le second (36') élément d'arcade respectivement et les parties respectives reçues de manière coulissante dans celles-ci sont des parties d'extrémité respectives de l'élément d'arcade supplémentaire (60).

5. Ensemble de verres solaires à griffes selon la revendication 2, dans lequel le ressort (50) agit entre des première et deuxième parties d'extrémité supportées par la gaine (40) et l'autre élément d'arcade (34) respectivement.

6. Ensemble de verres solaires à griffes selon la revendication 5, dans lequel l'élément d'arcade supplémentaire (34) passe à travers la première partie d'extrémité (42) et ledit ressort (50) et se termine dans la deuxième partie d'extrémité.

7. Ensemble de verres solaires à griffes selon la revendication 5 ou 6, dans lequel la gaine (40) a une fente (48) et la deuxième partie d'extrémité a une saillie (46) reçue de manière coulissante dans la fente (48) pour permettre un déplacement des parties formant cadre (10, 12) entre les positions proximale et éloignée.

8. Ensemble de verres solaires à griffes selon la revendication 3 ou 4, dans lequel chaque ressort (50) agit entre des première (42) et deuxième (64) parties d'extrémité respectives supportées par la gaine respective (38a, 38b) et la partie reçue de manière coulissante dans celle-ci.

9. Ensemble de verres solaires à griffes selon la revendication 8, dans lequel la partie respective reçue de manière coulissante dans chaque gaine (38a, 38b) passe à travers la première partie d'extrémité respective (42) supportée par la gaine et le ressort (50) situé dans celle-ci et se termine dans la deuxième partie d'extrémité (64).

10. Ensemble de verres solaires à griffes selon la revendication 8 ou 9, dans lequel chaque gaine (38a, 38b) a une fente (48b) et la deuxième partie d'extrémité (64) de la partie reçue de manière coulissante dans la gaine a une saillie (72) reçue de manière coulissante dans la fente pour permettre un déplacement des parties formant cadre (10, 12) entre les positions proximale et éloignée.

11. Ensemble de verres solaires à griffes selon la revendication 1, 2 ou 3, dans lequel la gaine ou chaque gaine, selon le cas, a une fente (48, 48') et la partie ou chaque partie reçue de manière coulissante dans celle-ci a une saillie (46, 72) reçue de manière coulissante dans la fente (48, 48').

12. Ensemble de verres solaires à griffes selon l'une quelconque des revendications précédentes, dans lequel chaque partie formant cadre (10, 12) a deux griffes espacées (26, 28 ; 31, 32) pour venir en prise avec un bord d'une paire de lunettes.

13. Ensemble de verres solaires à griffes destiné à être monté sur une paire de lunettes, comportant :
une première (10) et une seconde (12) partie formant cadre comportant chacune une partie de maintien de verre (14, 16),
des premier (34) et second (36) éléments d'arcade s'étendant à partir desdites première (10) et seconde (12) parties formant cadre, et
une partie formant connecteur (38) agissant entre les éléments d'arcade (34 : 36) et comportant une gaine cylindrique (40) et une partie reçue de manière coulissante dans celle-ci pour permettre un déplacement des parties formant cadre (10 : 12) entre une position proximale et une position éloignée, et un ressort (53) situé dans la gaine cylindrique agissant entre la gaine (40) et ladite partie reçue de manière coulissante dans celle-ci pour rappeler les première (10) et seconde (12) parties formant cadre vers une des positions, **caractérisé en ce que** :
la gaine cylindrique (40) comporte un premier et un second tronçon dans lequel une première et une seconde partie respectivement est reçue de manière coulissante, lesdites première et seconde parties étant supportées par lesdits premier (34) et second (36) éléments d'arcade respectivement, et un premier (53) et un second (54) ressort est reçu dans lesdits premier et second tronçons de gaine respectivement pour agir entre le tronçon de gaine respectif et la partie respective reçue de manière coulissante dans celle-ci pour rappeler les première (10) et seconde (12) parties formant cadre vers la position proximale, et
chaque partie formant cadre (10 : 12) a au moins une griffe (26 : 31) destinée à venir en prise avec une paire de lunettes pour monter l'ensemble de verres solaires à l'avant de la paire de lunettes.

14. Ensemble de verres solaires à griffes selon la revendication 13, dans lequel chaque partie formant cadre (10 : 12) a deux griffes espacées (26, 28 : 31, 32) destinées à venir en prise avec un bord d'une paire de lunettes.

15. Ensemble de verres solaires à griffes selon la revendication 13 ou 14, dans lequel le premier ressort (53) agit entre des première (42) et deuxième parties d'extrémité supportées par le premier tronçon de gaine et la première partie reçue de manière coulissante dans celle-ci respectivement et le second ressort (54) agit entre les troisième (44') et quatrième parties d'extrémité supportées par le second tronçon de gaine et la seconde partie reçue de manière coulissante dans celle-ci respectivement.

16. Ensemble de verres solaires à griffes selon la revendication 15, dans lequel la première partie reçue de manière coulissante dans le premier tronçon de gaine passe à travers la première partie d'extrémité (42) et le premier ressort (53) et se termine dans la deuxième partie d'extrémité, et la seconde partie reçue de manière coulissante dans le second tronçon de gaine passe à travers la troisième partie d'extrémité (44') et le second ressort (54) et se termine dans la quatrième partie d'extrémité.

17. Ensemble de verres solaires à griffes selon la revendication 15 ou 16, dans lequel chacun des premier et second tronçons de gaine a une fente (48 : 49) et chacune parmi la deuxième et la quatrième partie d'extrémité a une saillie respective (52 : 56) reçue de manière coulissante dans la fente respective (48 : 49) des premier et second tronçons de gaine pour permettre un déplacement des première et seconde parties formant cadre (10 : 12) entre les positions proximale et éloignée.

18. Ensemble de verres solaires à griffes selon la revendication 13 ou 14, dans lequel chaque tronçon de gaine a une fente (48 : 49) et la partie respective reçue de manière coulissante dans celle-ci a une saillie respective (52 : 56) reçue de manière coulissante dans la fente (48 : 49).

19. Ensemble de verres solaires à griffes selon l'une quelconque des revendications 12 à 16, dans lequel lesdites première et seconde parties reçues de manière coulissante sont des parties d'extrémité desdits premier (34) et second (36) éléments d'arcade respectivement.
